# EUROPEAN PATENT SPECIFICATION

(11) **EP 4 141 235 B1**
(45) Date of publication and mention of the grant of the patent: **07.05.2025**
(21) Application number: 20938906.3
(22) Date of filing: 04.06.2020
(51) Int. Cl.: F02B 39/00, F01D 25/24, F02B 37/00, F04D 29/42, F01D 9/04

(54) **TURBINE HOUSING AND SUPERCHARGER**
TURBINENGEHÄUSE UND AUFLADER
CARTER DE TURBINE ET TURBINE DE SURALIMENTATION

(43) Date of publication of application: 01.03.2023
(73) Proprietor: Mitsubishi Heavy Industries Marine Machinery & Equipment Co., Ltd., Nagasaki-shi Nagasaki 850-8610 (JP)
(72) Inventor: YAMASHITA, Masato, Tokyo 100-8332 (JP); TEZUKA, Taiji, Tokyo 100-8332 (JP); YAGI, Kenji, Tokyo 100-8332 (JP); IWASA, Yukihiro, Nagasaki-shi, Nagasaki 850-8610 (JP); MATSUO, Tetsuya, Nagasaki-shi, Nagasaki 850-8610 (JP); SHIRAKAWA, Taiyo, Nagasaki-shi, Nagasaki 850-8610 (JP)
(74) Representative: Hoffmann Eitle
(86) International application number: PCT/JP2020/022032
(87) International publication number: WO 2021/245860

(56) References cited:
- WO-A1-2015/083252
- WO-A1-2016/139799
- WO-A1-2020/021744
- WO-A1-2020/021744
- JP-A- 2019 094 899
- JP-A- 2019 124 222
- JP-A- H10 281 094
- JP-B2- 5 866 376
- JP-U- S59 157 538
- US-A1- 2019 301 358
- US-B2- 10 006 341

## Description

### TECHNICAL FIELD

The present disclosure relates to a turbine housing accommodating a turbine wheel and a supercharger including the turbine housing.

### BACKGROUND

A supercharger (e.g., turbocharger) may include a turbine for converting energy of exhaust gas discharged from an internal combustion engine (e.g., engine) into power (rotational force), and a compressor for compressing air supplied to the internal combustion engine by the power output from the turbine. The turbine of the supercharger includes a turbine wheel and a turbine housing accommodating the turbine wheel, and the compressor of the supercharger includes a compressor wheel mechanically coupled to the turbine wheel via a rotational shaft and a compressor housing accommodating the compressor wheel.

The housings (compressor housing, turbine housing) of the supercharger may be assembles obtained by fastening multiple components with fastening bolts (fastening members). The housing composed of multiple components has a risk that the fastening bolts are broken by wheel fragments flying when the wheel (compressor wheel, turbine wheel) is damaged and bursts during rotation, causing the wheel fragments to fly outside the housing. Therefore, the housing composed of multiple components is required to prevent wheel fragments from flying outside the housing, that is, to improve the containment.

JP5866376B discloses a compressor housing that includes an outer compressor housing surrounding the outer periphery of a compressor wheel, and an inner compressor housing accommodated in the outer compressor housing and defining a scroll passage between the outer and inner compressor housings. The inner compressor housing disclosed in JP5866376B includes a diffuser passage portion defining a diffuser passage for supplying air from the compressor wheel to the scroll passage between the diffuser passage portion and a bearing housing, a fastening portion fastened to the outer compressor housing by a fastening bolt, and an annular bellows portion disposed between the diffuser passage portion and the fastening portion.

Other examples of the prior art can be seen in documents WO 2020/021744 A1, US 2019/301358 A1, JP H1 0 281094 A and US 1 0 006 341 B2.

### SUMMARY

### Problems to be Solved

If the compressor wheel breaks during rotation of the compressor wheel, wheel fragments fly outward in the radial direction and enter the diffuser passage. At this time, the fastening bolt that fastens the outer compressor housing and the inner compressor housing is subjected to an impact load along the axial direction of the fastening bolt due to the wheel fragments such that the outer casing and the inner casing are spread apart. If the fastening bolt is broken by the impact load, the outer casing and the inner casing open, causing the wheel fragments to fly outside the housing.

The inner compressor housing disclosed in JP5866376B is adapted to absorb an axial force by elastically and plastically deforming the annular bellows portion. By absorbing the axial force with the annular bellows portion, the load on the fastening portion is reduced, preventing the fastening bolt from breaking and the wheel fragments from flying outside the housing. However, the housing disclosed in JP5866376B including the annular bellows portion is structurally complicated and may lead to an increase in cost.

In view of the above circumstances, an object of at least one embodiment of the present disclosure is to provide a turbine housing that has a simple structure and can effectively prevent wheel fragments from flying outside the turbine housing at the time of burst.

### Solution to the Problems

A turbine housing according to the present disclosure includes an inlet-side casing including a scroll portion having therein a scroll passage; an outlet-side casing fastened to the inlet-side casing by a first fastening member; and a passage forming member including a passage wall surface that defines an exhaust gas passage for guiding an exhaust gas from the scroll passage to a turbine wheel and fastened to the outlet-side casing by a second fastening member. The outlet-side casing includes: a cylindrical portion having therein an outlet passage through which the exhaust gas having being guided from the scroll passage to the turbine wheel and passed through the turbine wheel flows; a flange portion protruding radially outward from a downstream end portion of the cylindrical portion and configured to be fastened to the scroll portion by the first fastening member; and an annular plate portion protruding radially outward from an upstream end portion of the cylindrical portion and configured to be fastened to the passage forming member by the second fastening member. The annular plate portion has at least one recess that is recessed radially inward from an outer peripheral end of the annular plate portion. The annular plate portion abuts on a back surface of the passage forming member on an opposite side in an axial direction from the passage wall surface.

A supercharger according to the present disclosure includes a turbine wheel, and the turbine housing.

### Advantageous Effects

At least one embodiment of the present disclosure provides a turbine housing that has a simple structure and can effectively prevent wheel fragments from flying outside the turbine housing at the time of burst.

### BRIEF DESCRIPTION OF DRAWINGS

FIG. 1 is a schematic cross-sectional view of a turbine side of a supercharger equipped with a turbine housing according to an embodiment of the present disclosure, in a cross-section including the axis of the turbine housing.
FIG. 2 is a schematic configuration diagram for describing an overall configuration of the supercharger equipped with the turbine housing according to an embodiment of the present disclosure.
FIG. 3 is a partial enlarged cross-sectional view of the main portion shown in FIG. 1.
FIG. 4 is a diagram showing an example of the annular plate portion of the turbine housing according to an embodiment of the present disclosure.
FIG. 5 is a diagram showing another example of the annular plate portion of the turbine housing according to an embodiment of the present disclosure.
FIG. 6 is a schematic cross-sectional view of the supercharger equipped with the turbine housing according to another embodiment of the present disclosure, in a cross-section including the axis.

### DETAILED DESCRIPTION

Embodiments of the present disclosure will be described below with reference to the accompanying drawings. It is intended, however, that unless particularly identified, dimensions, materials, shapes, relative positions, and the like of components described in the embodiments shall be interpreted as illustrative only and not intended to limit the scope of the present disclosure.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

The same features can be indicated by the same reference numerals and not described in detail.

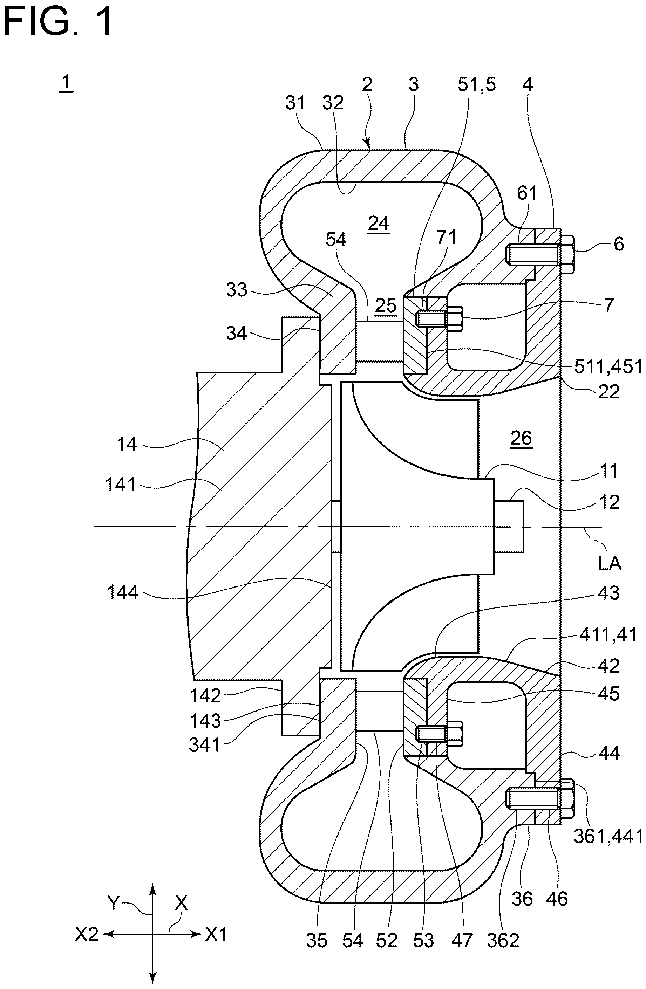

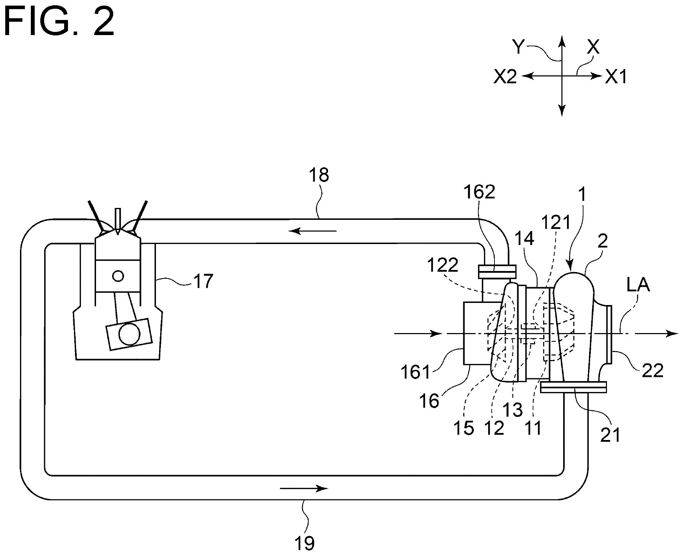

FIG. 1 is a schematic cross-sectional view of a turbine side of a supercharger equipped with a turbine housing according to an embodiment of the present disclosure, in a cross-section including the axis of the turbine housing. FIG. 2 is a schematic configuration diagram for describing an overall configuration of the supercharger equipped with the turbine housing according to an embodiment of the present disclosure.

As shown in FIG. 1, a turbine housing 2 according to some embodiments is mounted on a supercharger 1.

As shown in FIGs. 1 and 2, the supercharger 1 (e.g., turbocharger) according to some embodiments includes at least a turbine wheel 11 and a turbine housing 2 accommodating the turbine wheel 11. As shown in FIG. 2, the supercharger 1 further includes a rotational shaft 12, a bearing 13 rotatably supporting the rotational shaft 12, a bearing housing 14 accommodating the bearing 13, a compressor wheel 15, and a compressor housing 16 accommodating the compressor wheel 15.

Hereinafter, for example as shown in FIG. 2, an extension direction of the axis LA of the turbine housing 2 will be referred to as an axial direction X, and a direction perpendicular to the axis LA will be referred to as a radial direction Y. Of the axial direction X, a side (the right side in the drawing) on which the turbine housing 2 is located with respect to the bearing housing 14 will be referred to as one side X1, and a side (the left side in the drawing) on which the compressor housing 16 is located with respect to the bearing housing 14 will be referred to as the other side X2.

As shown in FIG. 2, the compressor housing 16 is disposed opposite to the turbine housing 2 across the bearing housing 14 in the axial direction X. Each of the turbine housing 2 and the compressor housing 16 is mechanically coupled to the bearing housing 14 by a fastening member such as a fastening bolt or a V clamp.

As shown in FIG. 2, the rotational shaft 12 has a longitudinal direction along the axial direction X. The rotational shaft 12 is mechanically coupled to the turbine wheel 11 at one end portion 121 (an end portion on one side X1) in the longitudinal direction, and is mechanically coupled to the compressor wheel 15 at the other end portion 122 (an end portion on the other side X2) in the longitudinal direction. The turbine wheel 11 is disposed coaxially with the compressor wheel 15.

As shown in FIG. 2, the compressor wheel 15 is disposed on a supply line 18 for supplying air (combustion gas) to an engine 17 (combustion device). The turbine wheel 11 is disposed on a discharge line 19 for discharging the exhaust gas from the engine 17.

The supercharger 1 rotates the turbine wheel 11 by the exhaust gas introduced from the engine 17 into the turbine housing 2 through the discharge line 19. Since the compressor wheel 15 is mechanically coupled to the turbine wheel 11 via the rotational shaft 12, the compressor wheel 15 rotates in conjunction with the rotation of the turbine wheel 11. Rotating the compressor wheel 15, the supercharger 1 compresses the air (combustion gas) introduced into the compressor housing 16 through the supply line 18 and sends the compressed air to the engine 17.

In the illustrated embodiment, as shown in FIG. 2, the compressor housing 16 has an air intake port 161 for introducing air from the outside of the compressor housing 16 along the axial direction X, and an air supply port 162 for discharging the air having passed through the compressor wheel 15 to the outside of the compressor housing 16 along the radial direction Y and sending the discharged air to the engine 17.

In the illustrated embodiment, as shown in FIG. 2, the turbine housing 2 has an exhaust gas introduction port 21 for introducing the exhaust gas into the turbine housing 2 from the outer side in the radial direction Y, and an exhaust gas discharge port 22 for discharging the exhaust gas having rotated the turbine wheel 11 to the outside of the turbine housing 2 along the axial direction X.

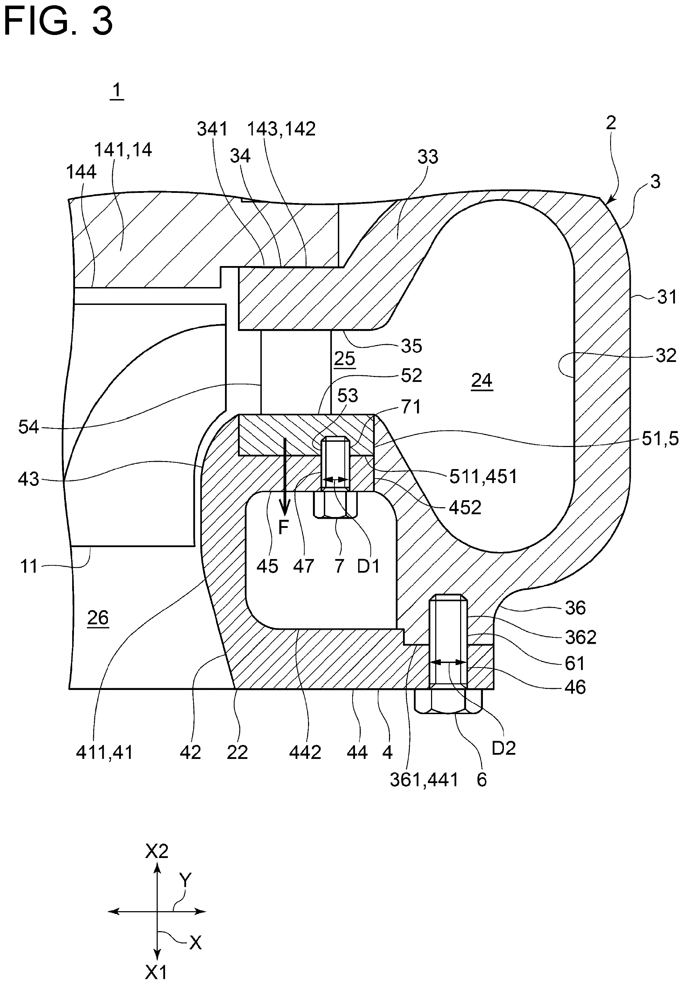

FIG. 3 is a partial enlarged cross-sectional view of the main portion shown in FIG. 1.

As shown in FIGs. 1 and 3, the turbine housing 2 has a scroll passage 24 through which the exhaust gas before passing through the turbine wheel 11 flows, an exhaust gas passage 25 disposed between the scroll passage 24 and the turbine wheel 11 for guiding the exhaust gas from the scroll passage 24 to the turbine wheel 11, and an outlet passage 26 through which the exhaust gas having being guided from the scroll passage 24 to the turbine wheel 11 and passed through the turbine wheel 11 flows.

The exhaust gas discharged from the engine 17 passes through the exhaust gas introduction port 21, the scroll passage 24, and the exhaust gas passage 25 of the turbine housing 2 in this order, and is then sent to the turbine wheel 11. The exhaust gas sent to the turbine wheel 11 flows through the outlet passage 26 to one side X1 along the axial direction X, and is then discharged from the exhaust gas discharge port 22 to the outside of the turbine housing 2.

As shown in FIGs. 1 and 3, the turbine housing 2 includes an inlet-side casing 3, an outlet-side casing 4 fastened to the inlet-side casing 3 by a first fastening member 6, and a passage forming member 5 fastened to the outlet-side casing 4 by a second fastening member 7.

As shown in FIGs. 1 and 3, the inlet-side casing 3 includes a scroll portion 31 having therein the scroll passage 24. The scroll passage 24 is defined by an inner wall surface 32 of the scroll portion 31. Further, the inlet-side casing 3 has the exhaust gas introduction port 21.

The scroll passage 24 is a passage for guiding the exhaust gas introduced into the turbine housing 2 through the exhaust gas introduction port 21 to the turbine wheel 11. The scroll passage 24 has a scroll shape surrounding the periphery (the outer side in the radial direction Y) of the turbine wheel 11. The scroll passage 24 communicates with the exhaust gas introduction port 21 disposed upstream in the exhaust gas flow direction.

As shown in FIG. 3, the passage forming member 5 includes a passage wall surface 52 defining the exhaust gas passage 25. The passage wall surface 52 extends along a direction intersecting (perpendicular to) the axis LA.

In the illustrated embodiment, the passage forming member 5 is formed separately from the inlet-side casing 3. The passage forming member 5 includes an annular plate portion 51. The plate portion 51 includes a fastened portion 53 to which the second fastening member 7 is fastened, and the above-described passage wall surface 52 formed on the other side X2. In the illustrated embodiment, the plate portion 51 is formed in an annular shape, but in other embodiments, the plate portion 51 may be formed in an arc shape extending along the circumferential direction about the axis LA.

In the illustrated embodiment, the inlet-side casing 3 further includes an exhaust gas passage portion 34 extending radially inward from an inner end portion 33 (other-side inner end portion) of the scroll portion 31 on the other side X2. The exhaust gas passage portion 34 includes a bearing-side passage wall surface 35 defining the exhaust gas passage 25 between the bearing-side passage wall surface 35 and the passage wall surface 52. The bearing-side passage wall surface 35 extends along a direction intersecting (perpendicular to) the axis LA on the other side X2 of the passage wall surface 52 and faces the passage wall surface 52 located on one side X1.

The exhaust gas passage 25 is a passage for guiding the exhaust gas from the scroll passage 24 to the turbine wheel 11. The exhaust gas passage 25 is disposed between the scroll passage 24 and the turbine wheel 11 and extends along a direction intersecting (perpendicular to) the axis LA. The exhaust gas passage 25 communicates with the scroll passage 24 disposed upstream in the exhaust gas flow direction.

As shown in FIGs. 1 and 3, the outlet-side casing 4 includes a cylindrical portion 41 having therein the outlet passage 26, a flange portion 44 protruding radially outward from a downstream end portion 42 of the cylindrical portion 41, and an annular plate portion 45 protruding radially outward from an upstream end portion 43 of the cylindrical portion 41.

As shown in FIGs. 1 and 3, the cylindrical portion 41 has an inner wall surface 411 extending along the axis LA and defining the outlet passage 26. The downstream end portion 42 of the cylindrical portion 41 is located downstream (one side X1) of the upstream end portion 43 in the exhaust gas flow direction and has the exhaust gas discharge port 22.

The outlet passage 26 is a passage for guiding the exhaust gas having passed through the turbine wheel 11 to the exhaust gas discharge port 22. The outlet passage 26 is disposed on one side X1 of the turbine wheel 11, extends along the axial direction X, and communicates with each of the exhaust gas passage 25 located upstream in the exhaust gas flow direction and the exhaust gas discharge port 22 located downstream in the exhaust gas flow direction.

As shown in FIG. 3, the flange portion 44 is configured to be fastened to the scroll portion 31 of the inlet-side casing 3 by the first fastening member 6.

In the embodiment shown in FIG. 3, the scroll portion 31 includes a protruding portion 36 protruding to one side X1 from the end portion on one side X1, and an end surface 361 of the protruding portion 36 abuts on an outer peripheral edge surface 441 formed on the outer peripheral edge of the flange portion 44 on the other side X2. The outer peripheral edge surface 441 of the flange portion 44 is located on one side X1 with respect to the inner peripheral edge surface 442. The first fastening member 6 has a fastening portion 61 having a male-threaded outer periphery. The first fastening member 6 connects and fixes the scroll portion 31 of the inlet-side casing 3 and the flange portion 44 of the outlet-side casing 4 by inserting the fastening portion 61 into a flange-side insertion hole 46 formed in the flange portion 44, and screwing (fastening) it into a fastened portion 362 of the protruding portion 36 having a female-threaded inner periphery.

As shown in FIG. 3, the annular plate portion 45 is configured to be fastened to the passage forming member 5 by the second fastening member 7.

In the embodiment shown in FIG. 3, a surface 451 of the annular plate portion 45 on the other side X2 abuts on a back surface 511 of the plate portion 51 on the opposite side (the other side X2) in the axial direction X from the passage wall surface 52. The back surface 511 has the fastened portion 53. The second fastening member 7 has a fastening portion 71 having a male-threaded outer periphery. The second fastening member 7 connects and fixes the passage forming member 5 and the annular plate portion 45 of the outlet-side casing 4 by inserting the fastening portion 71 into an insertion hole 47 formed in the annular plate portion 45, and screwing (fastening) it into the fastened portion 53 of the passage forming member 5 having a female-threaded inner periphery. The insertion hole 47 is formed at a position inward of the flange-side insertion hole 46 and the fastened portion 362 of the protruding portion 36 in the radial direction Y.

In the illustrated embodiment, as shown in FIG. 1, the bearing housing 14 includes a cylindrical portion 141 extending along the axial direction X, and a flange portion 142 protruding outward in the radial direction Y from the outer periphery of an end portion of the cylindrical portion 141 on one side X1. The inlet-side casing 3 has a back surface 341 on the opposite side (the other side X2) in the axial direction X from the bearing-side passage wall surface 35 of the exhaust gas passage portion 34, and the back surface 341 abuts on a surface 143 of the flange portion 142 of the bearing housing 14 on one side X1. In the illustrated embodiment, the inlet-side casing 3 is connected and fixed to the bearing housing 14 by securing the back surface 341 to the surface 143 with a fastening member (not shown).

In the illustrated embodiment, the turbine wheel 11 is accommodated in a space defined by the inner wall surface 411 of the cylindrical portion 41 and an end surface 144 of the bearing housing 14.

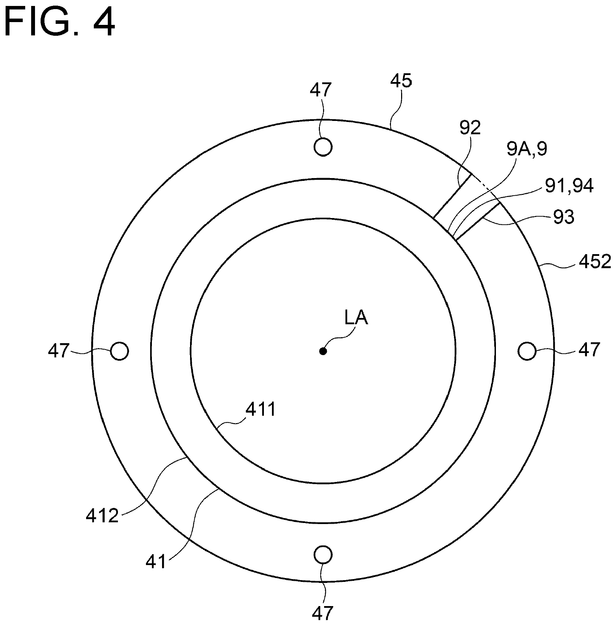

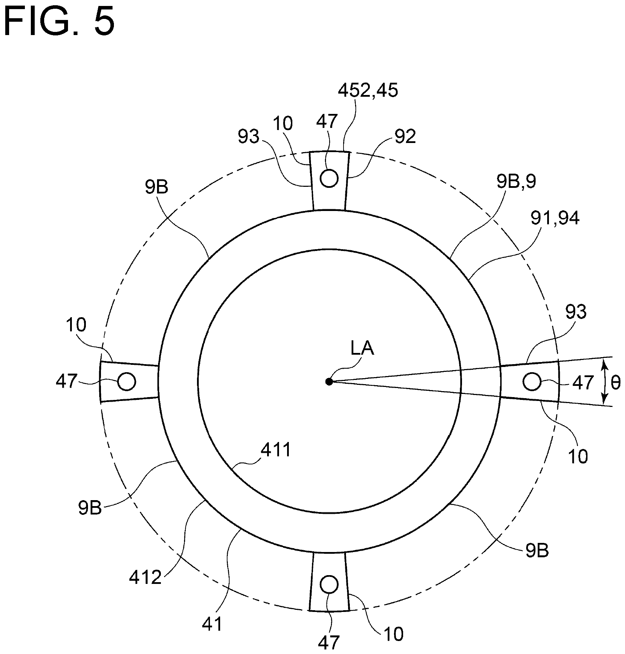

FIG. 4 is a diagram showing an example of the annular plate portion of the turbine housing according to an embodiment of the present disclosure. FIG. 5 is a diagram showing another example of the annular plate portion of the turbine housing according to an embodiment of the present disclosure.

As shown in FIG. 3, the turbine housing 2 according to some embodiments includes the above-described inlet-side casing 3, the above-described outlet-side casing 4, and the above-described passage forming member 5. The outlet-side casing 4 includes the above-described cylindrical portion 41, the above-described flange portion 44, and the above-described annular plate portion 45. As shown in FIGs. 4 and 5, the annular plate portion 45 has at least one recess 9 that is recessed inward in the radial direction Y from an outer peripheral end 452.

In the illustrated embodiments, as shown in FIGs. 4 and 5, the recess 9 (9A, 9B) includes a pair of side wall portions 92 and 93 extending along a direction intersecting (perpendicular to) the circumferential direction, and a bottom wall portion 91 connecting the radially inner ends of the pair of side wall portions 92 and 93.

In the embodiment shown in FIG. 4, the annular plate portion 45 has one recess 9 (9A). In the embodiment shown in FIG. 5, the annular plate portion 45 has a plurality of recesses 9 (9B).

When the turbine wheel 11 breaks during rotation of the turbine wheel 11, wheel fragments fly outward in the radial direction Y and enter the exhaust gas passage 25, so that the wheel fragments may apply the impact load F (axial load, see FIG. 3) to the turbine housing 2 such that the inlet-side casing 3 and the outlet-side casing 4 are spread apart. If the annular plate portion 45 of the outlet-side casing 4 is of disk shape having no recess 9, the impact load F transmitted from the passage forming member 5 to the annular plate portion 45 can be transmitted over the entire circumference along the circumferential direction, and the impact load F can be distributed over the entire circumference. The annular plate portion 45 of disk shape having no recess 9 is so rigid that the first fastening member 6, which fastens the inlet-side casing 3 to the outlet-side casing 4, is broken by the impact load F before the annular plate portion 45 is deformed by the impact load F.

With the above configuration, the annular plate portion 45 of the outlet-side casing 4 has at least one recess 9 that is recessed radially inward from the outer peripheral end 452. That is, the turbine housing 2 has a simple structure in which the annular plate portion 45 of the outlet-side casing 4 has at least one recess 9. The annular plate portion 45 having at least one recess 9 can effectively reduce the rigidity compared to the case where the annular plate portion 45 is of disk shape having no recess 9, because the recess 9 prevents the transmission of the impact load F along the circumferential direction while the recess 9 creates a stress concentration zone which becomes the starting point of deformation.

When the rigidity of the annular plate portion 45 is reduced, the amount of deformation of the annular plate portion 45 upon receiving the impact load F increases, and the amount of impact energy that can be absorbed when the annular plate portion 45 deforms under the impact load F increases. By deforming the annular plate portion 45 with reduced rigidity to absorb impact energy before the first fastening member 6, which fastens the inlet-side casing 3 and the outlet-side casing 4, is broken by the impact load F, the turbine housing 2 can reduce the impact load F applied to the first fastening member 6 and prevent the first fastening member 6 from breaking. Further, by preventing the first fastening member 6 from breaking, the turbine housing 2 can effectively prevent the wheel fragments from flying outside the turbine housing 2 at the time of burst.

In some embodiments, as shown in FIGs. 4 and 5, the annular plate portion 45 has at least one insertion hole 47, as described above, formed at a circumferential position different from the circumferential position corresponding to the at least one recess 9 to allow the second fastening member 7 to pass through. The at least one recess 9 is configured such that a deepest portion 94 of the recess 9 in the radial direction (radially innermost portion) is located inward of the at least one insertion hole 47 in the radial direction Y.

In the illustrated embodiments, as shown in FIGs. 4 and 5, the deepest portion 94 is provided at the bottom wall portion 91. In the embodiments shown in FIGs. 4 and 5, the bottom wall portion 91 is at the same position in the radial direction Y as the outer wall surface 412 of the cylindrical portion 41.

With the above configuration, the annular plate portion 45 is fastened to the passage forming member 5 by inserting the second fastening member 7 into the insertion hole 47 formed at a circumferential position different from the circumferential position corresponding to the recess 9. In the annular plate portion 45, since the deepest portion 94 of the recess 9 in the radial direction (radially innermost portion) is located radially inward of the insertion hole 47, the recess 9 prevents the impact load F transmitted from the passage forming member 5 through the insertion hole 47 from being transmitted along the circumferential direction. By preventing the transmission of the impact load F along the circumferential direction to narrow the range where the impact load F is borne, the annular plate portion 45 can reduce the rigidity in this range and more effectively absorb the impact energy in this range.

In some embodiments, as shown in FIG. 5, the at least one insertion hole 47 includes a plurality of insertion holes 47, and the at least one recess 9 includes a plurality of recesses 9. Each of the plurality of recesses 9 is disposed between two adjacent insertion holes 47 of the plurality of insertion holes 47 in the circumferential direction.

With the above configuration, since each of the plurality of recesses 9 is disposed between two adjacent insertion holes 47 of the plurality of insertion holes 47 in the circumferential direction, the recess 9 prevents the impact load F transmitted from the passage forming member 5 through one insertion hole 47 from being transmitted along the circumferential direction to a portion with the other insertion hole 47. By preventing the transmission of the impact load F along the circumferential direction to the portion with the other insertion hole 47 to make each portion with the insertion hole 47 bear the impact load F, the annular plate portion 45 can reduce the rigidity in each portion with the insertion hole 47 and more effectively absorb the impact energy in each portion.

In some embodiments, as shown in FIG. 5, the annular plate portion 45 has a plurality of protrusions 10 each of which is defined by two adjacent recesses 9 of the plurality of recesses 9 in the circumferential direction. Each of the plurality of protrusions 10 is provided with one of the plurality of insertion holes 47.

In the illustrated embodiment, each of the plurality of protrusions 10 includes a pair of side wall portions 92, 93 which sandwich the insertion hole 47 provided in the protrusion 10, and an outer wall portion (outer peripheral end 452) connecting the radially outer ends of the pair of side wall portions 92, 93. The insertion hole 47 is preferably formed in the center of the protrusion 10 in the circumferential direction.

With the above configuration, since each protrusion 10 provided with one of the plurality of insertion holes 47 has a small angular range θ in the circumferential direction, the annular plate portion 45 limits the transmission along the circumferential direction of the impact load F transmitted from the passage forming member 5 through the insertion hole 47 to the angular range θ of the protrusion 10. By preventing the transmission of the impact load F along the circumferential direction to limit the range where the impact load F is borne to the angular range θ, the annular plate portion 45 can reduce the rigidity in the angular range θ and more effectively absorb the impact energy in the angular range θ.

In some embodiments, as shown in FIG. 3, the flange portion 44 includes at least one flange-side insertion hole 46, as described above, into which the first fastening member 6 is inserted. The at least one insertion hole 47 is configured to have a smaller hole diameter than the at least one flange-side insertion hole 46. That is, the hole diameter D1 of the insertion hole 47 is smaller than the hole diameter D2 of the flange-side insertion hole 46.

With the above configuration, since the insertion hole 47, into which the second fastening member 7 is inserted, has a smaller hole diameter than the flange-side insertion hole 46, into which the first fastening member 6 is inserted, the impact load F input from the second fastening member 7 to the insertion hole 47 can be increased. More specifically, when the passage forming member 5 or the inlet-side casing 3 slips with respect to the outlet-side casing 4 upon collision of wheel fragments with the turbine housing 2, the second fastening member 7 and the insertion hole 47, where the gap between members is small, can be brought into closer contact earlier than the first fastening member 6 and the flange-side insertion hole 46, where the gap between members is large, so that the impact load F input from the second fastening member 7 to the insertion hole 47 can be increased. By increasing the impact load F input from the second fastening member 7 to the insertion hole 47, the turbine housing 2 can mitigate the impact load F input from the first fastening member 6 to the flange-side insertion hole 46 and thus prevent the first fastening member 6 from breaking more effectively.

As described above, in some embodiments, for example as shown in FIG. 3, the passage forming member 5 is formed separately from the inlet-side casing 3.

If the passage forming member 5 and the inlet-side casing 3 are integrally formed, the annular plate portion 45 fastened to the passage forming member 5 (inlet-side casing 3) via the second fastening member 7 is supported by the inlet-side casing 3, which suppresses the deformation due to the impact load F. With the above configuration, since the passage forming member 5 is formed separately from the inlet-side casing 3, the annular plate portion 45 can easily deform without limitation when the inlet-side casing 3 is subjected to the impact load F, so that the first fastening member 6 can be prevented from breaking more effectively.

In some embodiments, as shown in FIGs. 1 and 3, the passage forming member 5 includes the plate portion 51 including the fastened portion 53 to which the second fastening member 7 is fastened and the passage wall surface 52, and at least one fixation nozzle 54 protruding from the passage wall surface 52 of the plate portion 51.

In the illustrated embodiment, as shown in FIG. 1, the at least one fixation nozzle 54 includes a plurality of fixation nozzles 54 arranged at intervals along the circumferential direction. Each of the plurality of fixation nozzles 54 extends along a direction intersecting the radial direction Y. The fixation nozzle 54 may be configured such that the circumferential positions of leading and trailing edges are different from each other.

With the above configuration, the passage forming member 5 includes the plate portion 51 including the fastened portion 53 to which the second fastening member 7 is fastened and the passage wall surface 52, and at least one fixation nozzle 54 protruding from the passage wall surface 52. Even in such a case, by deforming the annular plate portion 45 by the impact load F transmitted from the plate portion 51 of the passage forming member 5 to the annular plate portion 45 of the outlet-side casing 4, the first fastening member 6 can be prevented from breaking.

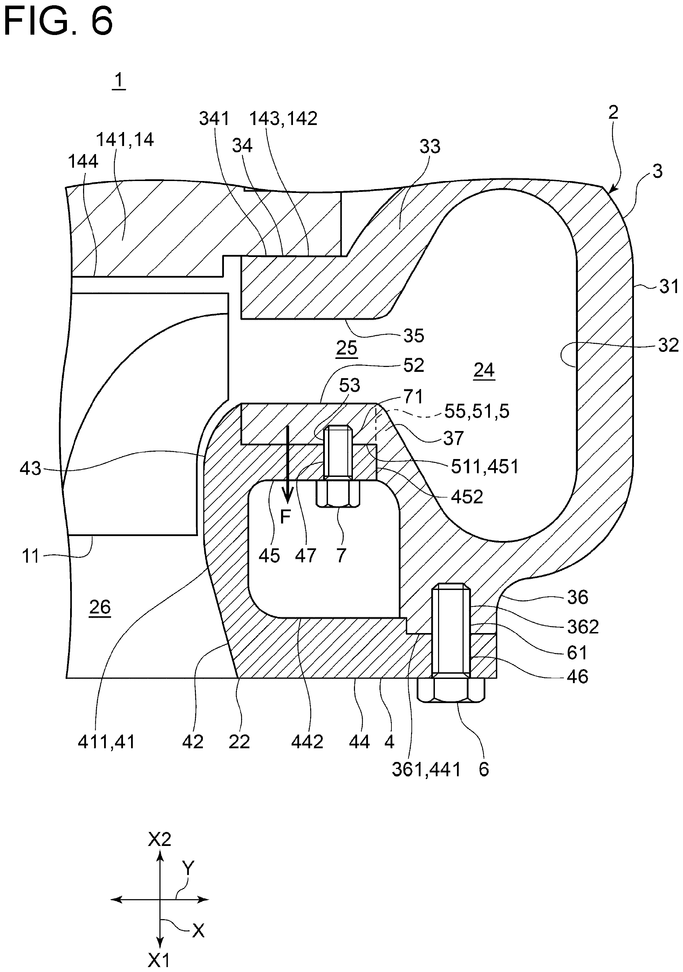

FIG. 6 is a schematic cross-sectional view of the supercharger equipped with the turbine housing according to another embodiment of the present disclosure, in a cross-section including the axis.

In some embodiments, as shown in FIG. 6, the passage forming member 5 is formed integrally with the inlet-side casing 3. In the illustrated embodiment, an outer peripheral end 55 of the passage forming member 5 is integrally formed with an inner end portion 37 (one-side inner end portion) of the scroll portion 31 on one side X1.

With the above configuration, since the passage forming member 5 is formed integrally with the inlet-side casing 3, when the impact load F that spreads the inlet-side casing 3 and the outlet-side casing 4 is applied to the passage forming member 5, part of the impact load F can be transmitted to the inlet-side casing 3 (inner end portion 37). When the passage forming member 5 transmits part of the impact load F to the inlet-side casing 3 (inner end portion 37), the impact load F transmitted from the passage forming member 5 to the outlet-side casing 4 can be migrated, and the first fastening member 6 can be prevented from breaking more effectively.

The supercharger 1 according to some embodiments includes the above-described turbine wheel 11, and the above-described turbine housing 2. With the above configuration, since the turbine housing 2 prevents the first fastening member 6 from breaking, the supercharger 1 can effectively prevent wheel fragments from flying outside the turbine housing 2 at the time of burst.

The contents described in the above embodiments would be understood as follows, for instance.
(1) A turbine housing according to at least one embodiment of the present disclosure includes an inlet-side casing including a scroll portion having therein a scroll passage; an outlet-side casing fastened to the inlet-side casing by a first fastening member; and a passage forming member including a passage wall surface that defines an exhaust gas passage for guiding an exhaust gas from the scroll passage to a turbine wheel and fastened to the outlet-side casing by a second fastening member. The outlet-side casing includes: a cylindrical portion having therein an outlet passage through which the exhaust gas having being guided from the scroll passage to the turbine wheel and passed through the turbine wheel flows; a flange portion protruding radially outward from a downstream end portion of the cylindrical portion and configured to be fastened to the scroll portion by the first fastening member; and an annular plate portion protruding radially outward from an upstream end portion of the cylindrical portion and configured to be fastened to the passage forming member by the second fastening member. The annular plate portion has at least one recess that is recessed radially inward from an outer peripheral end of the annular plate portion.

When the turbine wheel breaks during rotation of the turbine wheel, wheel fragments fly outward in the radial direction and enter the exhaust gas passage, so that the wheel fragments may apply the impact load to the turbine housing such that the inlet-side casing and the outlet-side casing are spread apart. If the annular plate portion is of disk shape having no recess, the impact load transmitted from the passage forming member to the annular plate portion can be transmitted over the entire circumference along the circumferential direction, and the impact load can be distributed over the entire circumference. The annular plate portion of disk shape having no recess is so rigid that the first fastening member, which fastens the inlet-side casing and the outlet-side casing, is broken by the impact load before the annular plate portion is deformed by the impact load.

With the above configuration (1), the annular plate portion of the outlet-side casing has at least one recess that is recessed radially inward from the outer peripheral end. That is, the turbine housing has a simple structure in which the annular plate portion of the outlet-side casing has at least one recess. The annular plate portion having at least one recess can effectively reduce the rigidity compared to the case where the annular plate portion is of disk shape having no recess, because the recess prevents the transmission of the impact load along the circumferential direction while the recess creates a stress concentration zone which becomes the starting point of deformation.

When the rigidity of the annular plate portion is reduced, the amount of deformation of the annular plate portion upon receiving the impact load increases, and the amount of impact energy that can be absorbed when the annular plate portion deforms under the impact load increases. By deforming the annular plate portion with reduced rigidity to absorb impact energy before the first fastening member, which fastens the inlet-side casing and the outlet-side casing, is broken by the impact load, the turbine housing can reduce the impact load applied to the first fastening member and prevent the first fastening member from breaking. Further, by preventing the first fastening member from breaking, the turbine housing can effectively prevent the wheel fragments from flying outside the turbine housing at the time of burst.

(2) In some embodiments, in the turbine housing described in the above (1), the annular plate portion has at least one insertion hole formed at a circumferential position different from a circumferential position corresponding to the at least one recess to allow the second fastening member to pass through. The at least one recess is configured such that a deepest portion of the at least one recess in the radial direction is located radially inward of the at least one insertion hole.

With the above configuration (2), the annular plate portion is fastened to the passage forming member by inserting the second fastening member into the insertion hole formed at a circumferential position different from the circumferential position corresponding to the recess. In the annular plate portion, since the deepest portion of the recess in the radial direction (radially innermost portion) is located radially inward of the insertion hole, the recess prevents the impact load transmitted from the passage forming member through the insertion hole from being transmitted along the circumferential direction. By preventing the transmission of the impact load along the circumferential direction to narrow the range where the impact load is borne, the annular plate portion can reduce the rigidity in this range and more effectively absorb the impact energy in this range.

(3) In some embodiments, in the turbine housing described in the above (2), the at least one insertion hole includes a plurality of insertion holes. The at least one recess includes a plurality of recesses. Each of the plurality of recesses is disposed between two adjacent insertion holes of the plurality of insertion holes in a circumferential direction.

With the above configuration (3), since each of the plurality of recesses is disposed between two adjacent insertion holes of the plurality of insertion holes in the circumferential direction, the recess prevents the impact load transmitted from the passage forming member through one insertion hole from being transmitted along the circumferential direction to a portion with the other insertion hole. By preventing the transmission of the impact load along the circumferential direction to the portion with the other insertion hole to make each portion with the insertion hole bear the impact load, the annular plate portion can reduce the rigidity in each portion with the insertion hole and more effectively absorb the impact energy in each portion.

(4) In some embodiments, in the turbine housing described in the above (3), the annular plate portion has a plurality of protrusions each of which is defined by two adjacent recesses of the plurality of recesses in the circumferential direction. Each of the plurality of protrusions is provided with one of the plurality of insertion holes.

With the above configuration (4), since each protrusion provided with one of the plurality of insertion holes has a small angular range in the circumferential direction, the annular plate portion limits the transmission along the circumferential direction of the impact load transmitted from the passage forming member through the insertion hole to the angular range of the protrusion. By preventing the transmission of the impact load along the circumferential direction to limit the range where the impact load is borne to the angular range, the annular plate portion can reduce the rigidity in the angular range and more effectively absorb the impact energy in the angular range.

(5) In some embodiments, in the turbine housing described in any one of the above (2) to (4), the flange portion has at least one flange-side insertion hole into which the first fastening member is inserted. The at least one insertion hole is configured to have a smaller hole diameter than the at least one flange-side insertion hole.

With the above configuration (5), since the insertion hole, into which the second fastening member is inserted, has a smaller hole diameter than the flange-side insertion hole, into which the first fastening member is inserted, the impact load input from the second fastening member to the insertion hole can be increased. More specifically, when the passage forming member or the inlet-side casing slips with respect to the outlet-side casing upon collision of wheel fragments with the turbine housing, the second fastening member and the insertion hole, where the gap between members is small, can be brought into closer contact earlier than the first fastening member and the flange-side insertion hole, where the gap between members is large, so that the impact load input from the second fastening member to the insertion hole can be increased. By increasing the impact load input from the second fastening member to the insertion hole, the turbine housing can mitigate the impact load input from the first fastening member to the flange-side insertion hole and thus prevent the first fastening member from breaking more effectively.

(6) In some embodiments, in the turbine housing described in any one of the above (1) to (5), the passage forming member is formed integrally with the inlet-side casing.

With the above configuration (6), since the passage forming member is formed integrally with the inlet-side casing, when the impact load that spreads the inlet-side casing and the outlet-side casing is applied to the passage forming member, part of the impact load can be transmitted to the inlet-side casing. When the passage forming member transmits part of the impact load to the inlet-side casing, the impact load transmitted from the passage forming member to the outlet-side casing can be migrated, and the first fastening member can be prevented from breaking more effectively.

(7) In some embodiments, in the turbine housing described in any one of the above (1) to (5), the passage forming member is formed separately from the inlet-side casing.

If the passage forming member and the inlet-side casing are integrally formed, the annular plate portion fastened to the passage forming member (inlet-side casing) via the second fastening member is supported by the inlet-side casing, which suppresses the deformation due to the impact load. With the above configuration (7), since the passage forming member is formed separately from the inlet-side casing, the annular plate portion can easily deform without limitation when the inlet-side casing is subjected to the impact load, so that the first fastening member can be prevented from breaking more effectively.

(8) In some embodiments, in the turbine housing described in the above (7), the passage forming member includes: a plate portion including a fastened portion to which the second fastening member is fastened and the passage wall surface; and at least one fixation nozzle protruding from the passage wall surface of the plate portion.

With the above configuration (8), the passage forming member includes the plate portion including the fastened portion to which the second fastening member is fastened and the passage wall surface, and at least one fixation nozzle protruding from the passage wall surface. In this case, by deforming the annular plate portion by the impact load transmitted from the plate portion of the passage forming member to the annular plate portion of the outlet-side casing, the first fastening member can be prevented from breaking.

(9) A supercharger according to at least one embodiment of the present disclosure includes a turbine wheel and the turbine housing described in any one of the above (1) to (8).

With the above configuration (9), since the turbine housing prevents the first fastening member from breaking, the supercharger can effectively prevent wheel fragments from flying outside the turbine housing at the time of burst.

### Reference Signs List

- 1: Supercharger
- 2: Turbine housing
- 21: Exhaust gas introduction port
- 22: Exhaust gas discharge port
- 24: Scroll passage
- 25: Exhaust gas passage
- 26: Outlet passage
- 3: Inlet-side casing
- 31: Scroll portion
- 32: Inner wall surface
- 33, 37: Inner end portion
- 34: Exhaust gas passage portion
- 35: Bearing-side passage wall surface
- 36: Protruding portion
- 362: Fastened portion
- 4: Outlet-side casing
- 41: Cylindrical portion
- 411: Inner wall surface
- 42: Downstream end portion
- 43: Upstream end portion
- 44: Flange portion
- 45: Annular plate portion
- 452: Outer peripheral end
- 46: Flange-side insertion hole
- 47: Insertion hole
- 5: Passage forming member
- 51: Plate portion
- 52: Passage wall surface
- 53: Fastened portion
- 54: Fixation nozzle
- 55: Outer peripheral end
- 6: First fastening member
- 7: Second fastening member
- 9: Recess
- 91: Bottom wall portion
- 92, 93: Side wall portion
- 94: Deepest portion
- 10: Protrusion
- 11: Turbine wheel
- 12: Rotational shaft
- 121: One end portion
- 122: Other end portion
- 13: Bearing
- 14: Bearing housing
- 142: Flange portion
- 15: Compressor wheel
- 16: Compressor housing
- 161: Air intake port
- 162: Air supply port
- 17: Engine
- 18: Supply line
- 19: Discharge line
- F: Impact load
- LA: Axis
- X: Axial direction
- X1: One side in axial direction
- X2: Other side in axial direction
- Y: Radial direction

## Claims

1. A turbine housing (2), comprising:
an inlet-side casing (3) including a scroll portion (31) having therein a scroll passage (24);
an outlet-side casing (4) fastened to the inlet-side casing (3) by a first fastening member(6); and
a passage forming member (5) including a passage wall surface (52) that defines an exhaust gas passage (25) for guiding an exhaust gas from the scroll passage (24) to a turbine wheel (11),
wherein the outlet-side casing (4) includes:
a cylindrical portion (41) having therein an outlet passage (26) through which the exhaust gas having being guided from the scroll passage (24) to the turbine wheel (11) and passed through the turbine wheel (11) flows;
a flange portion (44) protruding radially outward from a downstream end portion of the cylindrical portion (41)
wherein the flange portion (44) is fastened to the scroll portion (31) by the first fastening member (6), and
**characterized in that**
the passage forming member (5) is fastened to the outlet-side casing (4) by a second fastening member (7);
wherein the outlet-side casing (4) further includes an annular plate portion (45) protruding radially outward from an upstream end portion of the cylindrical portion (41) and fastened to the passage forming member (5) by the second fastening member (7), wherein the annular plate portion (45) abuts on a back surface (511) of the passage forming member (5) on an opposite side in an axial direction from the passage wall surface (52);
wherein the annular plate portion (45) has at least one recess (9) that is recessed radially inward from an outer peripheral end of the annular plate portion (45).

2. The turbine housing (2) according to claim 1,
wherein the annular plate portion (45) has at least one insertion hole (47) formed at a circumferential position different from a circumferential position corresponding to the at least one recess (9) to allow the second fastening member (7) to pass through, and
wherein the at least one recess (9) is configured such that a deepest portion of the at least one recess (9) in a radial direction is located radially inward of the at least one insertion hole (47).

3. The turbine housing (2) according to claim 2,
wherein the at least one insertion hole (47) includes a plurality of insertion holes (47),
wherein the at least one recess (9) includes a plurality of recesses (9), and
wherein each of the plurality of recesses (9) is disposed between two adjacent insertion holes (47) of the plurality of insertion holes (47) in a circumferential direction.

4. The turbine housing (2) according to claim 3,
wherein the annular plate portion (45) has a plurality of protrusions (10) each of which is defined by two adjacent recesses (9) of the plurality of recesses in the circumferential direction, and
wherein each of the plurality of protrusions (10) is provided with one of the plurality of insertion holes (47).

5. The turbine housing (2) according to any one of claims 2 to 4,
wherein the flange portion (44) has at least one flange-side insertion hole (46) into which the first fastening member (6) is inserted, and
wherein the at least one insertion hole (47) is configured to have a smaller hole diameter than the at least one flange-side insertion hole (46).

6. The turbine housing (2) according to any one of claims 1 to 5,
wherein the passage forming member (5) is formed integrally with the inlet-side casing (3).

7. The turbine housing (2) according to any one of claims 1 to 5,
wherein the passage forming member (5) is formed separately from the inlet-side casing (3).

8. The turbine housing (2) according to claim 7,
wherein the passage forming member (5) includes:
a plate portion (51) including a fastened portion to which the second fastening member (7) is fastened and the passage wall surface (52); and
at least one fixation nozzle (54) protruding from the passage wall surface (52) of the plate portion.

9. A supercharger, comprising:
a turbine wheel (11); and
the turbine housing (2) according to any one of claims 1 to 8.

## Patentansprüche

1. Turbinengehäuse (2), umfassend:
eine einlassseitige Verschaltung (3), die einen Spiralabschnitt (31) einschließt, der darin einen Spiraldurchgang (24) aufweist;
eine auslassseitige Verschaltung (4), die an der einlassseitigen Verschaltung (3) durch ein erstes Befestigungselement (6) befestigt ist; und
ein Durchgangbildungselement (5), das eine Durchgangswandoberfläche (52) einschließt, die einen Abgasdurchgang (25) zum Führen eines Abgases vom Spiraldurchgang (24) zu einem Turbinenrad (11) definiert,
wobei die auslassseitige Verschaltung (4) Folgendes einschließt:
einen zylinderförmigen Abschnitt (41), der darin einen Auslassdurchgang (26) aufweist, durch den das Abgas, das vom Spiraldurchgang (24) zum Turbinenrad (11) geführt und durch das Turbinenrad (11) durchgegangen ist, strömt;
einen Flanschabschnitt (44), der von einem stromabwärtigen Endabschnitt des zylinderförmigen Abschnitts (41) radial nach außen vorsteht,
wobei der Flanschabschnitt (44) am Spiralabschnitt (31) durch das erste Befestigungselement (6) befestigt ist, und
**dadurch gekennzeichnet, dass**
das Durchgangbildungselement (5) an der auslassseitigen Verschaltung (4) durch ein zweites Befestigungselement (7) befestigt ist;
wobei die auslassseitige Verschaltung (4) weiter einen ringförmigen Plattenabschnitt (45) einschließt, der von einem stromaufwärtigen Endabschnitt des zylinderförmigen Abschnitts (41) radial nach außen vorsteht und am Durchgangbildungselement (5) durch das zweite Befestigungselement (7) befestigt ist, wobei der ringförmige Plattenabschnitt (45) an einer Rückfläche (511) des Durchgangbildungselements (5) an einer gegenüberliegenden Seite in einer axialen Richtung von der Durchgangswandoberfläche (52) anliegt;
wobei der ringförmige Plattenabschnitt (45) mindestens eine Aussparung (9) aufweist, die von einem äußeren Umfangsende des ringförmigen Plattenabschnitts (45) radial nach innen ausgespart ist.

2. Turbinengehäuse (2) nach Anspruch 1,
wobei der ringförmige Plattenabschnitt (45) mindestens ein Einführloch (47) aufweist, das an einer anderen Umfangsposition als eine Umfangsposition gebildet ist, die der mindestens einen Aussparung (9) entspricht, um zuzulassen, dass das zweite Befestigungselement (7) durchgeht, und
wobei die mindestens eine Aussparung (9) so konfiguriert ist, dass ein tiefster Abschnitt der mindestens einen Aussparung (9) in einer radialen Richtung von dem mindestens einen Einführloch (47) radial nach innen gelegen ist.

3. Turbinengehäuse (2) nach Anspruch 2,
wobei das mindestens eine Einführloch (47) eine Vielzahl von Einführlöchern (47) einschließt,
wobei die mindestens eine Aussparung (9) eine Vielzahl von Aussparungen (9) einschließt, und
wobei jede der Vielzahl von Aussparungen (9) zwischen zwei angrenzenden Einführlöchern (47) der Vielzahl von Einführlöchern (47) in einer Umfangsrichtung angeordnet ist.

4. Turbinengehäuse (2) nach Anspruch 3,
wobei der ringförmige Plattenabschnitt (45) eine Vielzahl von Vorsprüngen (10) aufweist, von denen jeder durch zwei angrenzende Aussparungen (9) der Vielzahl von Aussparungen in der Umfangsrichtung definiert ist, und
wobei jeder der Vielzahl von Vorsprüngen (10) mit einem der Vielzahl von Einführlöchern (47) bereitgestellt ist.

5. Turbinengehäuse (2) nach einem der Ansprüche 2 bis 4,
wobei der Flanschabschnitt (44) mindestens ein flanschseitiges Einführloch (46) aufweist, in das das erste Befestigungselement (6) eingeführt wird, und
wobei das mindestens eine Einführloch (47) so konfiguriert ist, dass es einen kleineren Lochdurchmesser als das mindestens eine flanschseitige Einführloch (46) aufweist.

6. Turbinengehäuse (2) nach einem der Ansprüche 1 bis 5,
wobei das Durchgangbildungselement (5) einteilig mit der einlassseitigen Verschaltung (3) gebildet ist.

7. Turbinengehäuse (2) nach einem der Ansprüche 1 bis 5,
wobei das Durchgangbildungselement (5) getrennt von der einlassseitigen Verschaltung (3) gebildet ist.

8. Turbinengehäuse (2) nach Anspruch 7,
wobei das Durchgangbildungselement (5) Folgendes einschließt:
einen Plattenabschnitt (51), der einen befestigten Abschnitt, an dem das zweite Befestigungselement (7) befestigt ist, und die Durchgangswandoberfläche (52) einschließt; und
mindestens eine Fixierdüse (54), die von der Durchgangswandoberfläche (52) des Plattenabschnitts vorsteht.

9. Auflader, umfassend:
ein Turbinenrad (11); und
das Turbinengehäuse (2) nach einem der Ansprüche 1 bis 8.

## Revendications

1. Carter de turbine (2), comprenant :
un boîtier côté entrée (3) incluant une partie en spirale (31) présentant à l'intérieur un passage en spirale (24) ;
un boîtier côté sortie (4) fixé au boîtier côté entrée (3) par un premier élément de fixation (6) ; et
un élément formant passage (5) incluant une surface de paroi de passage (52) qui définit un passage de gaz d'échappement (25) permettant de guider un gaz d'échappement à partir du passage en spirale (24) vers une roue de turbine (11),
dans laquelle le boîtier côté sortie (4) inclut :
une partie cylindrique (41) présentant à l'intérieur un passage de sortie (26) à travers lequel circule le gaz d'échappement ayant été guidé à partir du passage en spirale (24) vers la roue de turbine (11) et passé à travers la roue de turbine (11) ;
une partie de bride (44) faisant saillie radialement vers l'extérieur par rapport à une partie d'extrémité aval de la partie cylindrique (41) dans lequel la partie de bride (44) est fixée à la partie en spirale (31) par le premier élément de fixation (6),
et
**caractérisé en ce que**
l'élément formant passage (5) est fixé au boîtier côté sortie (4) par un second élément de fixation (7) ;
dans lequel le boîtier côté sortie (4) inclut en outre une partie de plaque annulaire (45) faisant saillie radialement vers l'extérieur par rapport à une partie d'extrémité amont de la partie cylindrique (41) et fixée à l'élément formant passage (5) par le second élément de fixation (7), dans laquelle la partie de plaque annulaire (45) vient en butée sur une surface arrière (511) de l'élément formant passage (5) sur un côté opposé dans une direction axiale par rapport à la surface de paroi de passage (52) ;
dans lequel la partie de plaque annulaire (45) présente au moins un évidement (9) qui est évidé radialement vers l'intérieur par rapport à une extrémité périphérique extérieure de la partie de plaque annulaire (45).

2. Carter de turbine (2) selon la revendication 1,
dans lequel la partie de plaque annulaire (45) présente au moins un trou d'insertion (47) formé en une position circonférentielle différente d'une position circonférentielle correspondant au au moins un évidement (9) pour permettre au second élément de fixation (7) de passer à travers, et
dans lequel le au moins un évidement (9) est configuré de sorte qu'une partie la plus profonde du au moins un évidement (9) dans une direction radiale soit située radialement vers l'intérieur du au moins un trou d'insertion (47).

3. Carter de turbine (2) selon la revendication 2,
dans lequel le au moins un trou d'insertion (47) inclut une pluralité de trous d'insertion (47),
dans lequel le au moins un évidement (9) inclut une pluralité d'évidements (9), et
dans lequel chacun de la pluralité d'évidements (9) est disposé entre deux trous d'insertion adjacents (47) de la pluralité de trous d'insertion (47) dans une direction circonférentielle.

4. Carter de turbine (2) selon la revendication 3,
dans lequel la partie de plaque annulaire (45) présente une pluralité de saillies (10) dont chacune est définie par deux évidements adjacents (9) de la pluralité d'évidements dans la direction circonférentielle, et
dans lequel chacune de la pluralité de saillies (10) est fournie avec un de la pluralité de trous d'insertion (47).

5. Carter de turbine (2) selon l'une quelconque des revendications 2 à 4,
dans lequel la partie de bride (44) présente au moins un trou d'insertion côté bride (46) dans lequel le premier élément de fixation (6) est inséré, et
dans lequel le au moins un trou d'insertion (47) est configuré pour présenter un diamètre de trou inférieur au au moins un trou d'insertion côté bride (46).

6. Carter de turbine (2) selon l'une quelconque des revendications 1 à 5,
dans lequel l'élément formant passage (5) est formé intégralement avec le boîtier côté entrée (3).

7. Carter de turbine (2) selon l'une quelconque des revendications 1 à 5,
dans lequel l'élément formant passage (5) est formé séparément du boîtier côté entrée (3).

8. Carter de turbine (2) selon la revendication 7,
dans lequel l'élément formant passage (5) inclut :
une partie de plaque (51) incluant une partie fixée à laquelle le second élément de fixation (7) est fixé et la surface de paroi de passage (52) ; et
au moins une buse de fixation (54) faisant saillie par rapport à la surface de paroi de passage (52) de la partie de plaque.

9. Turbine de suralimentation, comprenant :
une roue de turbine (11) ; et
le carter de turbine (2) selon l'une quelconque des revendications 1 à 8.
